# EUROPÄISCHE PATENTANMELDUNG

(11) **EP 1 388 795 A2**
(43) Veröffentlichungstag der Anmeldung: **11.02.2004**
(21) Anmeldenummer: 03017815.6
(22) Anmeldetag: 05.08.2003
(51) Int. Cl.: G06F 17/60

(54) **Verfahren zur Bereitstellung von Informationen zu einer Ware**

(30) Priorität: 06.08.2002 DE 10236041
(71) Anmelder: Loeper, Angelika, Dr., 52064 Aachen (DE); Helbig, Elahl, 53125 Bonn (DE)
(72) Erfinder: Helbig, Ralf, Dr.habil., 53125 Bonn (DE)
(74) Vertreter: Castell, Klaus, Dr.-Ing.

(57) **Zusammenfassung**

Die Erfindung betrifft ein Verfahren zur Bereitstellung von Informationen zu einer Ware (13, 17, 20), bei dem die Ware (13, 17, 20) auf dem Weg zum Endverbraucher (4) mehrere Besitzer (1, 2, 3) durchläuft und jeder Besitzer (1, 2, 3) die Ware (13, 17, 20) behandelt, wobei Besitzer (1, 2, 3) während und/oder nach ihrem Besitzstand an der Ware (13, 17, 20) über eine Datenverbindung (8) Daten (12, 18, 21) über eine Änderung der Ware (13, 17, 20) in einen Datenpool (7) eingeben und/oder Daten (12, 18, 21) über die Änderung der Ware (13, 17, 20) aus dem Datenpool (7) abrufen, wobei die von Vorbesitzern eingegebenen Daten (12, 18, 21) über die Änderung der Ware (13, 17, 20) durch die Besitzer (1, 2, 3) nicht änderbar sind, sodass mit einem nachfolgenden Besitzer (1, 2, 3), in dessen Besitz die Ware (13, 17, 20) eine Änderung erfährt, der Datenpool (7) erweitert wird.

## Beschreibung

Die Erfindung betrifft ein Verfahren zur Bereitstellung von Informationen zu einer Ware.

Im Verlauf der Produktions- und Handelskette einer Ware vom Hersteller zum Verbraucher stellt sich regelmäßig die Aufgabe, einem Folgebesitzer Informationen über den Zustand, die Bestandsteile oder beispielsweise die Herkunft der Ware zur Verfügung zu stellen. Insbesondere ist dies der Fall, wenn diese Informationen die Kaufabsicht des Folgebesitzers beeinflussen können.

Im Lebensmittelbereich ist es beispielsweise üblich, Angaben wie ein Haltbarkeitsdatum oder auch eine Auflistung der in der Ware enthaltenen Bestandteile auf die Verpackung der Ware aufzudrucken. Vermehrt befinden sich auf Warenverpackungen in jüngster Zeit sogar Hinweise auf die Internetpräsenz des Warenherstellers, mitunter sogar Internetadressen von speziellen Informationsseiten. Gerade als Konsequenz aus den publik gewordenen Lebensmittelskandalen der letzten Jahre werden außerdem häufig spezielle Vermerke mit Aussagen über die Herkunft der Ware an der Warenverpackung angebracht. So kann ein Endverbraucher der Ware bereits einige Informationen zu Ihrer Qualität entnehmen.

Problematisch ist hierbei jedoch, dass in der Regel nur beim letzten Produktionsschritt, der Verpackung, solche Informationen angebracht werden können. Das Gros der Daten, aus denen auf die Qualität der Ware geschlossen werden könnte, ist der Ware zu diesem Zeitpunkt bereits nicht mehr zu entnehmen. Den üblichen Angaben fehlen gänzlich aufgeschlüsselte Daten, die sich auf die jeweiligen Bestandteile einer Ware beziehen, so zum Beispiel die vollständigen Herkunftsnachweise aller Bestandteile. Auch können entsprechende Informationen nicht ausreichend individualisiert und flexibel an der Ware angebracht werden, sondern verbleiben meist einheitlich für eine lange Zeit, bis die Verpackungsmaschine veränderte Einstellungen bekommt. Dem Folgebesitzer und/oder dem Endverbraucher fehlt also in fast allen Fällen eine Fülle von Informationen zur Geschichte und somit zur Beurteilung der wirklichen Qualität der Ware.

Der Erfinder hat sich daher die Aufgabe gestellt, ein Verfahren zu entwickeln, welches eine deutlich höhere Transparenz für Waren schafft und Folgebesitzern und/oder Endverbrauchern eine möglichst umfassende Menge von die Qualität der Ware kennzeichnenden Daten zur Verfügung stellt.

Erfindungsgemäß löst diese Aufgabe ein Verfahren zur Bereitstellung von Informationen zu einer Ware, bei dem die Ware auf dem Weg zum Endverbraucher mehrere Besitzer durchläuft und jeder Besitzer die Ware behandelt, dadurch gekennzeichnet, dass Besitzer während und/oder nach ihrem Besitzstand an der Ware über eine Datenverbindung Daten über eine Änderung der Ware in einen Datenpool eingeben und/oder Daten über die Änderung der Ware aus dem Datenpool abrufen, wobei die von Vorbesitzern eingegebenen Daten über die Änderung der Ware durch die Besitzer nicht änderbar sind, sodass mit einem nachfolgenden Besitzer, in dessen Besitz die Ware eine Änderung erfährt, der Datenpool erweitert wird.

Die Erfindung sieht vor, dass ein Datenpool, also eine Datensammelstelle, eingerichtet wird. In diesem Datenpool sollen alle Daten gesammelt werden, die für die Beurteilung der Qualität oder zur Kenntnisvermittlung des Inhalts einer Ware als relevant erachtet werden. Jeder Besitzer der Ware auf dem Weg der Ware zum Endverbraucher wird demzufolge verpflichtet, relevante Daten seines Produktionsschritts möglichst bereits vor Übergabe der Ware an den Folgebesitzer in den Datenpool einzubringen. Zur Übermittlung der Daten in den Datenpool wird dabei eine geeignete Datenverbindung zur Verfügung gestellt. Im Lebensmittelbereich könnten hier beispielsweise Angaben zur durchschnittlichen Lagertemperatur oder auch zur höchsten Lagertemperatur Aufnahme in den Datenpool finden.

Gleichzeitig steht es jedem Besitzer der Ware frei, von Vorbesitzem eingegebene Daten über die Waren aus dem Datenpool einzusehen. Ändern oder löschen kann jeder Besitzer hingegen nur die von ihm selbst eingegebenen Daten. Vorzugsweise geschieht dies, während die Ware noch in seinem Besitz ist.

Auf dem Weg der Ware vom ersten Herstellungsschritt bis zum Verbraucher wird so eine Vielzahl von relevanten Daten zu jeder Ware erfasst und dem Datenpool hinzugefügt, sodass sich im Datenpool zu jedem Zeitpunkt oder Produktionsschritt der Ware alle relevanten Daten auch aus der Vergangenheit der Ware abrufen lassen. Der Datenpool wächst also stetig mit dem Schicksal der Ware.

Der Endverbraucher hat keine Daten in den Datenpool einzugeben. Er ist nur Nutznießer des Verfahrens, denn er kann die relevanten Daten der Vorbesitzer zur Änderung der Ware ebenfalls abrufen. So wird für den Endverbraucher die der Ware zugehörige Produktions- und Handelskette in ihrer Gesamtheit oder zumindest zum großen Teil transparent.

Es ist hierbei von Vorteil, wenn jedem Besitzer und/oder dem Endverbraucher ein Datenfilter zugeordnet ist, der die eingebbaren Daten bestimmt. Hierdurch kann insbesondere die Einheitlichkeit der Daten, die ein Besitzer eingibt, erreicht werden. Auch wird gegenüber dem Besitzer Klarheit geschaffen, welche Daten er zu den Waren bereitzustellen hat. Gleichzeitig kann auch für mehrere Unternehmen mit vergleichbaren Arbeitsschritten im Produktionsprozess einer Ware eine vergleichbare Datenbasis geschaffen werden. Für den Endverbraucher wäre in diesem Datenfilter beispielsweise kodierbar, dass er keine Daten eingeben darf. Denkbar wäre jedoch auch, dass der Endverbraucher Daten zur Beurteilung der Ware in den Datenpool eingibt. Eine solche Möglichkeit zur Bewertung der Ware und/oder des Vorbesitzers kann selbstverständlich auch für andere Besitzer Sinn machen.

Vorteilhaft ist es zudem, wenn jedem Besitzer und/oder dem Endverbraucher ein Datenfilter zugeordnet ist, der die abrufbaren Daten bestimmt. Hierdurch kann zum einen die abrufbare Datenmenge zu einer Ware auf ein übersichtliches Maß beschränkt werden. Zum anderen können aber auch Daten, die dem Nachbesitzer nicht einsehbar sein sollen, vor dessen Einsicht geschützt werden.

Ein weiterer Vorteil in dem Verfahren kann dadurch erreicht werden, dass die Eingabe mindestens eines Teils der Daten automatisch erfolgt. Gerade in großen Betrieben mit automatisierten Produktionsabläufen kann dies sehr praktisch sein. Hierdurch wird der zusätzliche Aufwand eines Besitzers zum Erfassen der erforderlichen Daten auf ein Minimum beschränkt. Darüber hinaus werden hierdurch auch die Einheitlichkeit der Daten, die Zeitnähe der Eingabe in den Datenpool und die Zuverlässigkeit der Eingabe in größtmöglichem Maß automatisch gewährleistet.

Es ist von besonderem Vorteil, wenn die Datenverbindung über das Internet bereitgestellt wird. Hierdurch wird das Verfahren sehr flexibel und leicht erweiterbar. Der Zugang zum Internet ist - falls nicht bereits vorhanden - für die meisten Unternehmen relativ leicht darstellbar. Auch hat eine Vielzahl von Endverbrauchern entsprechende Ressourcen, sodass auch diese Endverbraucher mit relativ wenig Aufwand einen Zugriff auf den Datenpool erlangen können. Selbstverständlich ist aber auch jede beliebige andere Art von Netzwerk mit oder ohne Einbeziehung des Internets an dieser Stelle denkbar.

In einer weiteren beispielhaften Ausführung des Verfahrens ist dieses dadurch gekennzeichnet, dass bei der Übergabe der Ware von einem Besitzer zu einem anderen Besitzer oder zum Endverbraucher die vom Vorbesitzer in den Datenpool eingegebenen Daten zur Veränderung der Ware mit einer Datenvorgabe verglichen werden und nur bei einem vorgegebenen Vergleichsergebnis die Übergabe freigegeben wird. Hierdurch lassen sich Quality-Management-Systeme leicht in das vorgeschlagene Verfahren implementieren. Auch erhält der Nachbesitzer bzw. Endverbraucher eine höhere Sicherheit, dass die Ware bestimmte Merkmale innerhalb einer vorgesehenen Qualitätstoleranz besitzt.

In einer vorteilhaften Variante dieser Ausführung des Verfahrens wird hierbei die Datenvorgabe vom Datenpool bereitgestellt. Gemäß diesem Vorschlag können mit minimalem Aufwand einheitliche Datenvorgaben für mehrere unterschiedliche Betriebe vorgegeben werden. Auch kann eine Änderung der Datenvorgabe zügig und insbesondere für alle hiervon betroffenen Betriebe gleichzeitig durchgeführt werden.

Von besonderem Vorteil ist es, wenn bei dem erfindungsgemäßen Verfahren die Daten des Datenpools durch eine Datenpooladministration löschbar und veränderbar sind. Die Einsetzung einer Datenpooladministration bietet viele Vorteile: Zum einen können in dieser Instanz Entscheidungen, beispielsweise über Datenvorgabengrenzwerte, möglichst unbeeinflusst von den betroffenen Betrieben getroffen werden. Hierdurch ergibt sich eine deutlich höhere Kontrollierbarkeit sowohl durch den Verbraucher als auch beispielsweise durch staatliche und/oder andere unabhängige Instanzen. Außerdem erfahren durch die Einführung einer Datenpooladministration die Daten im Datenpool einen möglichst hohen Schutz vor Manipulation.

In einer weiteren vorteilhaften Variante des Verfahrens ist dieses dadurch gekennzeichnet, dass die Daten des Datenpools nach einer bestimmten Zeitspanne aus dem Datenpool entnommen werden. Die entnommenen Daten können unveränderbar z. B. auf CD-ROM abgelegt oder gelöscht werden. Hierdurch wird zum einen die zu speichernde Datenmenge im Datenpool nach oben begrenzt und somit Speicherressourcen eingespart; zum anderen verlieren die gespeicherten Daten im Nörmalfall nach Ablauf einer bestimmte Zeitspanne auch an Bedeutung, sodass es dann nur wenig Sinn macht, die Daten weiter gespeichert zu halten.

Des Weiteren bietet es sich vorteilhaft an, dass die Ware mit Mitteln zur Speicherung von Zugangsdaten versehen ist, die einem Besitzer und/oder dem Endverbraucher zumindest einen Teil des Datenpfads zu den der Ware zuordenbaren Daten erkennbar machen. Denkbar sind hier insbesondere eine Internetadresse, unter der Zugang zum Datenpool erlangt werden kann, ein Pfad, der innerhalb dieser Webadresse zum Datenpool führt, oder aber eine Kennzeichnung der Ware selbst. Eine Kennzeichnung der Ware selbst könnte beispielsweise eine Nummer und/oder einen Kode aufweisen. Angedacht sind hier alle geeigneten Mittel zur Speicherung der Zugangsdaten, insbesondere also auch sowohl maschinell lesbare wie nicht maschinell lesbare, elektronische wie nichtelektronische und sichtbare ebenso wie nicht sichtbare Mittel. Die Zugangsdaten können hierbei in der Form von Klartext oder aber auch auf beliebige Weise kodiert vorliegen.

Mit besonders geringem Aufwand und hoher Praxistauglichkeit kann dies dadurch umgesetzt werden, dass die Zugangsdaten durch einen Aufdruck auf die Ware sichtbar angebracht sind. Insbesondere der Endverbraucher profitiert hiervon, denn er besitzt im Normalfall nur geringe Stückzahlen einer jeweiligen Ware, sodass für ihn ein automatisches Erfassen der Zugangsdaten, wie es beispielsweise eine Chip-Kodierung ermöglichen würde, nur in Ausnahmefällen vernünftig erscheint. Insbesondere der Endverbraucher wird Wert auf eine Erkennbarkeit der Zugangsdaten durch reine Betrachtung der Ware und einfaches Ablesen legen. Geeignet sind an dieser Stelle aber selbstverständlich auch alternativ und/oder zusätzlich aufgedruckte Strichkodes oder andere Kodes, die sich auch maschinell oder kombiniert händisch-maschinell ablesen lassen. Ein Beispiel wäre ein auf eine Warenverpackung angebrachter Strichkode, den ein kaufinteressierter Endkunde einfach an ein hierzu vorgesehenes Scangerät hält, wodurch initiiert unmittelbar die der Ware zuordenbaren Daten von der Steuereinheit des Scangeräts aus dem Datenpool abgerufen und - gegebenenfalls für eine Maske aufbereitet - auf einem Display am Scangerät dem Endverbraucher dargestellt werden.

Eine vorteilhafte Möglichkeit der Architektur des Datenpools besteht darin, dass der Datenpool die Gesamtheit von Datensätzen und Datenvorgaben darstellt, wobei jeweils ein Datensatz einer Ware eindeutig zuordenbar ist und jeweils eine Datenvorgabe einem Besitzer und/oder einer bestimmten Besitzer-Nachbesitzer-Schnittstelle eindeutig zuordenbar ist. Jede Ware hätte dann also einen zugehörigen Datensatz, in dem alle im Produktions- und Handelsprozess der Ware anfallenden Daten über die Änderung der Ware gespeichert würden. Die Datenvorgaben können gut dazu genutzt werden, für vom jeweiligen Besitzer einzugebende Daten zur Änderung der Ware Grenzwerte festzulegen. Es bieten sich hier beispielsweise die Möglichkeiten an, absolute Grenzwerte für einen Besitzer festzulegen, innerhalb derer die von ihm einzugebenden Daten unabhängig vom Nachbesitzer liegen müssen, oder die Datenvorgaben stattdessen auf Besitzer-Nachbesitzer-Schnittstellen zu beziehen, sodass sich verschiedene Nachbesitzer und/oder Nachbesitzergruppen auf die Einhaltung der Grenzwerte bei vom jeweiligen Vorbesitzer stammenden Produkten verlassen können.

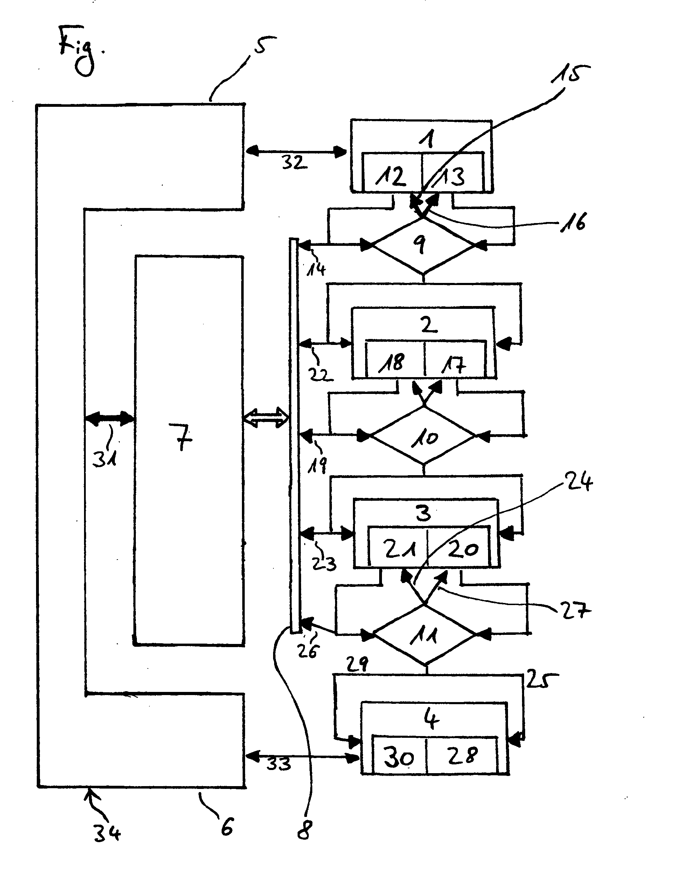

Die einzige Figur zeigt schematisch den Warenfluss und den Informationsfluss in einer beispielhaften Ausgestaltung des vorgeschlagenen Verfahrens. Als Besitzer der Ware sind in der Figur ein Produzent 1, ein Verarbeiter 2 und ein Händler 3 dargestellt. Zusätzlich ist als letzte Station der Kette ein Endverbraucher 4 dargestellt. Neben diesen Stationen des Warenflusses sind noch eine Datenpooladministration 34 sowie ein zentraler Datenpool 7 dargestellt. Zudem ist als Schnittstelle zwischen den Warenbesitzern 1, 2, 3 und dem zentralen Datenpool 7 das Internet 8 symbolisiert abgebildet. Schließlich umfasst die Figur noch zu jedem Besitzer 1, 2 bzw. 3 der Ware jeweils zugehörige Datenvergleichsinstanzen 9, 10 und 11 zur Qualitätssicherung.

Im einzelnen kommt den in der Figur enthaltenen Elementen folgende Bedeutung zu:

Der Produzent 1 erstellt die Ware 13 und hält alle qualitätsbeeinflussenden Daten 12 fest. Möglich sind hier z. B. manuelle Eingabe via Internet-Browser und Internet 8 oder eine automatische Datenerfassung und Weiterleitung. Die von ihm eingegebenen Daten 12 werden im zentralen Datenpool 7 gespeichert. Die Figur umfasst nur einen Produzenten 1. Selbstverständlich ist ihre Aussage aber auf beliebig viele Produktionsstufen und somit beliebig viele Produzenten analog erweiterbar. Von jedem Produzenten sind ein Zugang zum zentralen Datenpool 7 und eine Rückverfolgung der Prozesse der Vorgängerstufen möglich (nicht dargestellt).

Im Fluss der Daten 12 und der Ware 13 schließt an die Behandlungsstufe des Produzenten 1 eine Datenvergleichsinstanz 9 an. Qualitätssicherungsmaßnahmen werden durchgeführt, geprüft und dokumentiert. Schließlich erfolgt noch eine Abnahmeprüfung der Ware 13. Hierzu werden kennzeichnende Daten 12 der Ware 13 mit Datenvorgaben verglichen. Nach positiver Rückmeldung 15 aus dem Soll-Ist-Vergleich wird die Ware 13 in die nächste Stufe der Kette übergeben. Dies kann sowohl ein weiterer Produzent als auch ein Verarbeiter 2 sein. Mit der Freigabe und entsprechender Übergabe der Ware 13 an den Nachbesitzer werden auch die Daten 12 freigegeben. Sie werden in den zentralen Datenpool 7 übertragen. Im in der Figur dargestellten Beispiel erfolgt diese Übertragung 14 der Daten 12 an den zentralen Datenpool 7 über das Internet 8. Ebenso funktioniert auch der Abruf von Daten aus dem zentralen Datenpool 7 (nicht explizit dargestellt).

Bei negativer Rückmeldung 15 des Vergleichs der die Waren 13 kennzeichnenden Daten 12 mit den Datenvorgaben wird die Ware 13 als Warenretoure 16 in die Produktion zurückgeführt.

Der Verarbeiter 2 verarbeitet und verändert die in seinem Besitz befindliche Ware 17 und hält alle qualitätsbeeinflussenden Daten 18 fest. Mögliche Wege der Übertragung 19 der Daten 18 zum zentralen Datenpool 7 sind auch hier die manuelle Eingabe via Internet-Browser oder eine automatische Datenerfassung und Weiterleitung. Die Daten 18 werden im zentralen Datenpool 7 gespeichert. Die Figur zeigt nur eine Verarbeitungsstufe 2 in der Kette. Selbstverständlich sind aber auch hier beliebig viele Verarbeitungsstufen und demzufolge auch beliebig viele Verarbeiter möglich. Das Flussschema ist dann analog auf die Anzahl der Verarbeiter zu erweitern. Zu erwähnen ist hier, dass Lagerung und Transport der Ware auch als Veränderung der Ware in Zeit und Raum gezählt werden können. Dies macht insbesondere dann Sinn, wenn die Ware 17 nur eine relativ kurze Zeit in einer verkaufbaren Qualität bleibt. Insbesondere bei Lebensmitteln ist dies oft zu finden. Auch können gerade hier bestimmte Daten 18, wie beispielsweise die Warentemperatur während eines Transports, von entscheidender Bedeutung für die Qualität der Ware 17 sein.

Von jedem Verarbeiter 2 sind eine Verbindung 22 zum zentralen Datenpool 7 und eine Rückverfolgung der Prozesse der Vorgängerstufe möglich.

An die Verarbeitungsstufe 2 schließt sich wie an die Produktionsstufe 1 eine Datenvergleichsinstanz 10 an. Diese erfüllt im vorliegenden Beispiel dieselben qualitätssichernden Funktionen wie die oben beschriebene Datenvergleichsinstanz 9. Die Daten 18 zur Ware 17 werden bei Übergabe der Ware 17 mit der Übertragung 19 in den zentralen Datenpool eingegeben.

Als nächste Stufe der Kette zeigt die Figur den Händler 3. Der Händler 3 verändert mitunter ebenfalls die in seinem Besitz befindliche Ware 20 in qualitätsrelevanten Merkmalen und hält hierüber die Daten 21 fest. Beispielsweise verpackt er die Ware 20 endkundenfertig und/oder lagert sie. Auch hier müssen also die qualitätsrelevanten Daten 21 im zentralen Datenpool 7 gespeichert werden. Möglich ist hier wiederum eine manuelle Eingabe via Internet-Browser oder auch eine automatische Datenerfassung und Weiterleitung. Obwohl die Figur nur einen Händler 3 auf der Händlerstufe zeigt, lässt sich das Flussschema natürlich auf beliebig viele Händler analog erweitern. Von jedem Händler 3 sind eine Verbindung 23 zum zentralen Datenpool 7 und eine Rückverfolgung der Prozesse der Vorgängerstufen möglich.

Auch an die Handelsstufe 3 schließt sich in der Figur eine Datenkontrollinstanz 11 an. Hier wird insbesondere an der Schnittstelle zwischen dem letzten Händler 3 und dem Endverbraucher 4 eine Prüfung der Qualität der Ware 20 durchgeführt. Hierzu werden sowohl anhand von vorliegenden Daten 21 (z. B. in Bezug auf Haltbarkeit) als auch anhand der Ware 20 selbst (z. B. visuell erkennbare Schäden) Soll-Ist-Vergleiche durchgeführt. Die Freigabe und die Übergabe 25 der Ware 20 erfolgt auch hier selbstverständlich nur bei positiver Rückmeldung 24 aus dem Vergleich. Gleichzeitig hiermit werden dann auch die Daten 21 zur Übertragung 26 in den zentralen Datenpool 7 freigegeben. Bei negativer Rückmeldung 24 wird die Ware 20 nicht für den Verbraucher 4 freigegeben, sondern als Warenretoure 27 zurückgeführt.

Der Verbraucher 4 erhält mit der Ware 28 auch die Basisdaten 29 zum Produkt. Obwohl in der Figur aus Gründen der Übersichtlichkeit nicht dargestellt, kann der Verbraucher 4 anhand der Basisdaten 29 die qualitätsbeeinflussenden Prozesse in dem zentralen Datenpool 7 via Internet 8 mit Hilfe einer Waren-Identifikationsnummer rückverfolgen. Eine Erfassung von Verbraucherdaten 30 und eine Speicherung im zentralen Datenpool 7 kann ebenfalls möglich sein.

Der zentrale Datenpool 7 enthält somit die mit den Übertragungen 14, 19, 26 erfassten Daten 12, 18, 21 über die dokumentierten Prozesse aller Stufen 1, 2, 3, ggf.4 der gesamten Kette. Mit jedem Produzenten 1, jedem Verarbeiter 2 und jedem Händler 3 erweitert sich der zu einem Produkt 13, 17, 20, 28 gehörige Datenbestand. Die Daten 12, 18, 21 zu den zugehörigen qualitätsbeeinflussenden Prozessen können über Eingabemasken via Internet 8 in den Datenpool 7 eingetragen werden. Entsprechende Merkmale können mit Hilfe digitaler Messinstrumente auch automatisch erfasst und über eine Übertragungsroutine in den zentralen Datenpool 7 eingetragen werden. Die Dateneingabe kann hierbei zeitnah mit der realen Durchführung der Maßnahme oder mit einer regelmäßigen Verzögerung, die aber in einem angemessenen Zeitrahmen bleiben muss, vonstatten gehen.

Von allen Stufen der Kette können neben den selbst bereitgestellten Daten auch alle erfassten Daten der anderen Stufen eingesehen werden. Eine Reglementierung der Einsehbarkeit gemäß vereinbarten Benutzerrechtsregelungen ist vorgesehen.

Die Daten im zentralen Datenpool 7 können nach vielfältigen Fragestellungen durchsucht, verbunden und selektiert werden. Jedoch können Daten durch keinen Nutzer gelöscht werden. Bei nachgewiesenen Fehleingaben kann jedoch eine Löschung von der unabhängigen Datenpooladministration 34 vorgenommen werden.

Durch die Verknüpfung der Daten ist die Nachverfolgung des Lebenszyklus' der Ware über alle Stufen der Kette lückenlos möglich.

Die Datenpooladministration 34 ist eine von der Flusskette unabhängige Einrichtung, welche die korrekte und regelgerechte Datenerfassung und -verarbeitung überwacht, die Vergabe der Nutzungsrechte verwaltet und den Benutzern für alle technischen Fragen zum System zur Verfügung steht. In der Figur ist sie gemäß ihrer zwei grundlegenden Funktionen in die Elemente Kontrollinstanz 6 und Beratungsinstanz 5 aufgeteilt dargestellt. Sie hat vollen Zugriff 31 auf den zentralen Datenpool 7, d. h. sie kann alle eingegebenen Informationen abrufen, hat Zugriff auf die Programmierung des zentralen Datenpools 7 und kann - wenn nötig - den zentralen Datenpool 7 anpassen, korrigieren oder erweitern. Gleichzeitig füngiert sie als Ansprechpartner für jede Stufe 1, 2, 3, 4 der Kette.

Wie in der Figur dargestellt, ist ein Dialog 32 zwischen dem Produzenten 1 und der Beratungsinstanz 5 möglich und sogar gewollt. Selbstverständlich gilt dies ebenso für alle anderen Stufen 2, 3, 4 der Kette, insbesondere aber für alle Stufen der Kette vor dem Endverbraucher 4.

Wie der Figur weiterhin zu entnehmen ist, ist ein Dialog 33 zwischen dem Verbraucher 4 und der Kontrollinstanz 6 ebenfalls möglich und erwünscht. Selbstverständlich soll aber auch hier die Möglichkeit einer Kommunikation zwischen allen Stufen 1, 2, 3, 4 der Kette und der Kontrollinstanz 6 ermöglicht sein. Die Kontrollinstanz 6 wird beispielsweise auch bei Produzenten 1, Verarbeitern 2 und Händlern 3 zu überprüfen haben, ob alle Daten, die von Relevanz sind, auch erfasst und an den Datenpool 7 korrekt übermittelt werden.

## Patentansprüche

1. Verfahren zur Bereitstellung von Informationen zu einer Ware (13, 17, 20), bei dem die Ware (13, 17, 20) auf dem Weg zum Endverbraucher (4) mehrere Besitzer (1, 2, 3) durchläuft und jeder Besitzer (1, 2, 3) die Ware (13, 17, 20) behandelt, ***dadurch gekennzeichnet, dass*** Besitzer (1, 2, 3) während und/oder nach ihrem Besitzstand an der Ware (13, 17, 20) über eine Datenverbindung (8) Daten (12, 18, 21) über eine Änderung der Ware (13, 17, 20) in einen Datenpool (7) eingeben und/oder Daten (12, 18, 21) über die Änderung der Ware (13, 17, 20) aus dem Datenpool (7) abrufen, wobei die von Vorbesitzern eingegebenen Daten (12, 18, 21) über die Änderung der Ware (13, 17, 20) durch die Besitzer (1, 2, 3) nicht änderbar sind, sodass mit einem nachfolgenden Besitzer (1, 2, 3), in dessen Besitz die Ware (13, 17, 20) eine Änderung erfährt, der Datenpool (7) erweitert wird.

2. Verfallren nach Anspruch 1, ***dadurch gekennzeichnet, dass*** jedem Besitzer (1, 2, 3) und/oder dem Endverbraucher (4) ein Datenfilter zugeordnet ist, der die eingebbaren Daten (12, 18, 21, 30) bestimmt.

3. Verfahren nach einem der vorhergehenden Ansprüche, ***dadurch gekennzeichnet, dass*** jedem Besitzer (1, 2, 3) und/oder dem Endverbraucher (4) ein Datenfilter zugeordnet ist, der die abrufbaren Daten bestimmt.

4. Verfahren nach einem der vorhergehenden Ansprüche, ***dadurch gekennzeichnet, dass*** die Eingabe mindestens eines Teils der Daten (12, 18, 21) automatisch erfolgt.

5. Verfahren nach einem der vorhergehenden Ansprüche, ***dadurch gekennzeichnet, dass*** die Datenverbindung über das Internet (8) bereitgestellt wird.

6. Verfahren nach einem der vorhergehenden Ansprüche, ***dadurch gekennzeichnet, dass*** bei der Übergabe der Ware (13, 17, 20) von einem Besitzer (1, 2, 3) zu einem nachfolgenden Besitzer und/oder zum Endverbraucher (4) die vom Besitzer (1, 2, 3) in den Datenpool (7) einzugebenden Daten (12, 18, 21) mit einer Datenvorgabe verglichen werden und nur bei einem bestimmten Vergleichsergebnis die Übergabe freigegeben wird.

7. Verfahren nach Anspruch 6, ***dadurchgekennzeichnet, dass*** die Datenvorgabe vom Datenpool (7) bereitgestellt wird.

8. Verfahren nach einem der vorhergehenden Ansprüche, ***dadurch gekennzeichnet, dass*** die Daten des Datenpools (7) durch eine Datenpooladministration (34) löschbar und veränderbar sind.

9. Verfahren nach einem der vorhergehenden Ansprüche, ***dadurch gekennzeichnet, dass*** die Daten des Datenpools (7) nach einer bestimmten Zeitspanne automatisch aus dem Datenpool (7) entnommen werden.

10. Verfahren nach einem der vorhergehenden Ansprüche, ***dadurch gekennzeichnet, dass*** die Ware (13, 17, 20, 28) mit Mitteln zur Speicherung von Zugangsdaten versehen ist, die einem Besitzer (1, 2, 3) und/oder dem Endverbraucher (4) zumindest einen Teil des Datenpfads zu den der Ware (13, 17, 20, 28) zuordenbaren Daten erkennbar machen.

11. Verfahren nach Anspruch 10, ***dadurch gekennzeichnet, dass*** die Mittel zur Speicherung von Zugangsdaten durch einen Aufdruck auf die Ware (13, 17, 20, 28) umgesetzt sind.

12. Verfahren nach einem der vorhergehenden Ansprüche, ***dadurch gekennzeichnet, dass*** der Datenpool (7) die Gesamtheit von Datensätzen und Datenvorgaben umfasst, wobei jeweils ein Datensatz einer Ware (13, 17, 20, 28) eindeutig zuordenbar ist und jeweils eine Datenvorgabe einem Besitzer (1, 2, 3) und/oder einer bestimmten Besitzer-Nachbesitzer-Schnittstelle eindeutig zuordenbar ist.
